# EUROPEAN PATENT SPECIFICATION

(11) **EP 2 878 497 B1**
(45) Date of publication and mention of the grant of the patent: **21.02.2018**
(21) Application number: 13194739.2
(22) Date of filing: 28.11.2013
(51) Int. Cl.: B60R 21/2165

(54) **Airbag cover layer and airbag cover**
Deckschicht einer Airbag-Abdeckung und Airbag-Abdeckung
Couche de recouvrement d'airbag et recouvrement d'airbag

(43) Date of publication of application: 03.06.2015
(73) Proprietor: Volvo Car Corporation, 40 531 Göteborg (SE)
(72) Inventor: Heurlin, Fredrik, 42353 Torslanda (SE)
(74) Representative: Volvo Car Corporation

(56) References cited:
- EP-A2- 1 400 413
- WO-A2-03/002374
- DE-A1-102005 016 262
- DE-A1-102007 045 304
- US-A1- 2007 205 585

## Description

### TECHNICAL FIELD

The present disclosure relates to an airbag cover layer comprising a predetermined breaking zone. The disclosure further relates to an airbag cover comprising such an airbag cover layer.

### BACKGROUND

Modern vehicles may comprise one or more airbags located at various locations, e.g. in a steering wheel, dashboard, door, seat or roof lining. The airbag is normally covered by an airbag cover. In order to be able to inflate the airbag when desirable, the airbag cover may be provided with a predetermined breaking zone, i.e. a zone wherein the material of the airbag cover is weakened in some way, such that less force is needed to break the airbag cover in the predetermined breaking zone as compared to the rest of the airbag cover. Sometimes the airbag is covered by more than one airbag cover layer making up the airbag cover. The different airbag cover layers may comprise different materials. Often the airbag cover layer facing the user of the vehicle is made in an aesthetically pleasing way, utilizing materials such as plastics or leather. The material of outer airbag cover layer may e.g. be chosen to match, or be the same as, the material of the interior of the vehicle.

When using more than one airbag cover layer, each layer usually has its own predetermined breaking zone. It may then be difficult to superpose the predetermined breaking zones of the respective airbag cover layers on top of each other when manufacturing or assembling the airbag cover, since a small misalignment and/or displacement of the airbag cover layers results in that the predetermined breaking zones of the respective airbag cover layers are not on top of each other anymore.

Document WO 03/002374 A2 discloses an airbag cover layer according to the preamble of claim 1, having a plurality of breaking lines, which define a plurality of adjacent flaps for opening the cover when the airbag is deployed. At least some of the breaking lines extend essentially parallel to one another and define a plurality of individual flaps that extend essentially parallel to one another.

Document DE 10 2005 016262 A1 discloses a composite flat material for an airbag cover. It has an upper material stuck together with base material. The upper material comprises weakenings located over a separation line in the base material.

Document US 2007/205585 A1 discloses an airbag cover having lid portions which are opened by a breakable portion being broken when the airbag cover is pushed by an airbag which is being inflated and is formed from a synthetic resin by molding into a single layered airbag cover.

European Patent application no EP 1 400 413 A2 discloses an airbag cover comprising an inner cover layer and an outer cover layer. The inner cover layer has a first tear seam, i.e. a kind of predetermined breaking zone, and the outer cover layer has a second tear seam. At least a portion of the second tear seam overlies the first tear seam. The second tear seam may e.g. be wider than the first tear seam. Thereby the predetermined breaking zone of the outer layer will at least partly be located above the predetermined breaking zone of the inner cover layer even if the two airbag cover layers become somewhat misaligned.

The tear seams discloses in EP 1 400 413 A2 are thus able to cope with a translational mismatch between the two cover layers and are yet easy to break when the airbag is inflated. However, even if using the tear seams of EP 1 400 413 A2, there is a risk of mismatch if the second tear seam is not wide enough to compensate for the mismatch between the two airbag cover layers. Further, if the two cover layers suffer an angular mismatch, i.e. there is an angular difference between the extensions of their respective tear seams, there is a risk that the two tear seams will not be aligned, at least for a portion of the tear seam, the size of the mismatch depending on the angle of the angular mismatch. There may also be a mismatch, which is a combination of translational mismatch and angular mismatch.

If there is a mismatch between the predetermined breaking zones of the two cover layers, the opening forces for opening the cover, when inflating the airbag will increase as compared to when there is an alignment. This may result in a delayed and/or reduced inflation of the airbag.

There is hence a desire for an improved airbag cover layer, which may be used in an improved airbag cover.

### SUMMARY

The object of the present disclosure is to overcome or ameliorate at least one of the disadvantages of the prior art, or to provide a useful alternative.

It is desirable to provide an airbag cover layer being able to cope with translational and/or angular mismatch between airbag cover layers, during manufacture and/or assembly of an airbag cover.

It is further desirable to provide an airbag cover layer, which is easy to break when inflating the airbag it is covering.

It also desirable to provide an airbag cover layer which is easy to mount in a vehicle.

The object above may be achieved by the subject-matter of claim 1.

Thus, in a first aspect of the present invention there is provided an airbag cover layer comprising a predetermined breaking zone, the predetermined breaking zone having a main extension and a plurality of weakenings arranged along the main extension. At least one weakening of the plurality of weakenings intersects a preceding weakening and also intersects a subsequent weakening.

The airbag cover may be used to cover an airbag located in a vehicle, e.g. in a steering wheel, a dashboard, a door, a seat or a roof lining. The airbag cover layer may refer to an outer airbag cover layer.

The predetermined breaking zone has a main extension, which may be straight and/or curved, e.g. at least partly enclosing a logo of the vehicle manufacturer and/or following a shape of the steering wheel, dashboard, door, seat or roof lining.

The weakening may comprise a slot, i.e. a cut through the material of the airbag cover layer. Alternatively, or as a complement, it may comprise a plurality of small perforations, e.g. point-like punctures or small lines, arranged one after each other along the extension of the weakening. However, preferably the weakening comprises a locally reduced material thickness, such that it is not visible from the outside of the airbag cover. Hence the user of the vehicle cannot see that there is a predetermined breaking zone from the outside.

The weakening may have a shape with two ends. The weakenings may extend as straight lines, but they may also have a curved shape. The weakenings may have an elongate shape, i.e. being longer than being wide. The weakenings may have a length of between 0.1 and 30 mm, preferably between 0.3 and 20 mm and most preferably between 0.5 and 10 mm, as measured along the weakening from one end to another end.

As an alternative, or a complement, the weakening may have three, four, five or more ends, e.g. having the shape of a Y, X, *, Λ, †, or ‡. The weakening may also have the shape of the vehicle manufacturer's logo.

The weakenings of the plurality may differ from each other as regards length and/or orientation. Thereby a width of the predetermined breaking zone may vary along its extension. The weakenings may additionally, or alternatively, vary with respect to each other regarding shape, e.g. being curved or straight, and/or regarding how much the material is locally weakened. Thereby the force needed to break the material in order to open the airbag cover layer may vary along the extension of the predetermined breaking zone.

A preceding weakening of a certain weakening is a weakening located just before that certain weakening, when seen along the main extension of the predetermined breaking zone. A subsequent weakening is a weakening located just after that certain weakening, when seen along the main extension of the predetermined breaking zone. Hence, the preceding and the subsequent weakenings may be on respective sides of that certain weakening.

A weakening may intersect with more weakenings than a preceding one and a subsequent one. It may intersect more than once with the same weakening, e.g. if one of them has a curved shape.

The predetermined breaking zone of the airbag cover layer may have a width, i.e. a maximum transverse dimension, which may be at least 10 mm, preferably at least 15 mm and most preferably at least 20 mm wide. The width is measured perpendicular to a centre line of the predetermined breaking zone. The centre line thus follows the main extension of the predetermined breaking zone. By having such a wide predetermined breaking zone, it is secured that the predetermined breaking zone of the outer airbag cover layer aligns with the predetermined breaking zone of the inner airbag cover layer, even if there is a translational and/or an angular mismatch between the two airbag cover layers. The predetermined breaking zone of the inner airbag cover layer may be narrower than that of the outer airbag cover layer.

In an embodiment, at least 20%, preferably at least 50% and more preferably at least 80% of the weakenings of the plurality of weakenings intersect a preceding weakening and also intersect a subsequent weakening. Preferably, substantially all of the weakenings intersect a preceding weakening and also intersect a subsequent weakening. At the ends of the predetermined breaking zone, e.g. at or in the vicinity of a lateral side of the airbag, the first or last weakening may intersect with only one other weakening. There may also be additional weakenings, which do not intersect with any other weakenings. It would for example be possible to provide an airbag cover layer, wherein only a central portion of the predetermined breaking zone comprises weakenings, which intersect with the preceding and subsequent weakenings, while the non-central portions of the predetermined breaking zone may be made according to known technology.

The plurality of weakenings may be adapted to together form a continuous tear line, preferably a zigzag-shaped or undulating continuous tear line. The tear line relates to a tear in the airbag cover, after the material of the airbag cover layer has been broken in order to open the airbag cover layer. Due to the intersecting weakenings, the tear line may be continuous, such that substantially all of the tear line is formed of weakenings. The zigzag or undulating shape has been found to be beneficial, since it provides the tear line with a certain width.

As a contrast, according to prior art, wherein there are interspaces of unweakened material between the weakenings, the tear line is partly formed by a tear through the unweakened material. According to the invention, the at least one weakening has at least two ends and intersects the preceding weakening at a position located x% of the length along the weakening as measured from the end closest to the preceding weakening, wherein the value of x may preferably be 5% ≤ x ≤ 40%, more preferably 10% ≤ x ≤ 30%.

The at least one weakening may intersect the subsequent weakening at a position located y% of the length along the weakening as measured from the end closest to the subsequent weakening, wherein 0% < y ≤ 50%, preferably 5% ≤ y ≤ 40%, more preferably 10% ≤ y ≤ 30%.

One or more of the plurality of weakenings may have a straight shape. One or more of the plurality of weakenings may have a curved shape. One or more of the plurality of weakenings may have a partly straight and partly curved shape. The plurality of weakenings may comprise both straight and curved weakenings.

At least one weakening may be angled at an angle α in relation to the centre line L of the predetermined breaking zone, the angle α being between 0° and 90°, preferably between 15° and 75°, and most preferably between 30° and 60°. The angle α may be measured below or above the centre line depending on the orientation of the weakening. In case a weakening intersects the centre line L more than once, the angle α is defined as the smallest angle in relation to the centre line L. If the weakening has a curved shape, the angle α is determined utilizing the angle of a tangent of the weakening at the intersection of the centre line L. Similar, if the centre line has a curved shape, the angle α is determined utilizing the angle of a tangent of the centre line at the intersection with the weakening.

In an embodiment the plurality of weakenings comprises a first plurality of parallel weakenings, which are displaced in relation to each other as seen along the centre line L. They may e.g. have an angle α of preferably between 15° and 75°, and most preferably between 30° and 60°.

The plurality of weakenings may further comprise a second plurality of parallel weakenings, the weakenings of the second plurality being angled in relation to the weakenings of the first plurality by an angle β, β being between 0° and 180°, preferably between 30° and 150° and most preferably between 45° and 135°.

The first and/or second plurality of parallel weakenings may be uniformly or non-uniformly displaced in relation to each other.

The weakenings may then be arranged such that a weakening of the first plurality is followed by a weakening of the second plurality, which in turn is followed by a weakening of the first plurality, such that every second weakening belongs to the first plurality and every second weakening to the second plurality.

The predetermined breaking zone may comprise a pattern of weakenings, wherein the first and/or second plurality of weakenings is/are repeated in an additional plurality of weakenings, wherein the additional plurality of weakenings is located in parallel to the plurality first and/or second plurality of weakenings in the direction of the main extension of the predetermined breaking zone and displaced relative to the plurality first and/or second plurality of weakenings in a direction transverse to the main extension of the predetermined breaking zone. Thereby two, three, four or more parallel patterns of weakenings may be formed. Further, the weakenings of the different pluralities may be located transversally so close to each other that a weakening of the first and/or plurality may have an extension in the transverse direction, which overlaps with that of a weakening of the additional plurality. For example weakenings of both the first and/or second pluralities and the additional plurality may intersect with the centre line L.

The plurality of weakenings may form a grid-like pattern. The individual units constituting the grid-like pattern may have the shape of a square, rectangle, rhombus, rhomboid or a hexagon. If using a grid-like pattern, the width of the predetermined breaking zone may be chosen to be as wide as desired independent of the size of the individual units and/or independent of where the weakenings intersect with each other.

The plurality of weakenings may form a regular or an irregular pattern. The weakenings may differ from each other as regards length and orientation, e.g. leading to varying angles α and β. Thereby the width of the predetermined breaking zone may vary along its main extension. The weakenings may also vary regarding shape, e.g. curved or straight, and/or regarding how much the material is locally weakened.

In a second aspect of the present invention there is provided an airbag cover comprising a first airbag cover layer and a second airbag cover layer. The first airbag cover layer is in accordance with above and forms an outer airbag cover layer, which comprises a first predetermined breaking zone. The second airbag cover layer forms an inner airbag cover layer and comprises a second predetermined breaking zone. The second airbag cover layer may be according to prior art. The first predetermined breaking zone is wider than the second predetermined breaking zone. The outer airbag cover layer is located on top of the inner airbag cover layer, such that the first predetermined breaking zone substantially overlaps the second predetermined breaking zone, preferably the first predetermined breaking zone completely overlaps the second predetermined breaking zone.

The different airbag cover layers may comprise different materials. Often the airbag cover layer facing the user of the vehicle is made in an aesthetically pleasing way, utilizing materials such as plastics or leather. The material of outer airbag cover layer may e.g. be chosen to match, or be the same as, the material of the interior of the vehicle.

In a third aspect of the present invention there is provided an airbag arrangement comprising such an airbag cover layer and/or such an airbag cover. The airbag arrangement may be located, or adapted to be located, in a steering wheel, a dashboard, a door, a seat or a roof lining of the vehicle.

In a fourth aspect of the present invention there is provided a vehicle comprising such an airbag cover layer and/or such an airbag cover.

### BRIEF DESCRIPTION OF THE DRAWINGS

The present invention will hereinafter be further explained by means of non-limiting examples with reference to the appended drawings wherein:
- Fig. 1: is a schematic view of a vehicle with comprising an airbag covered by an airbag cover according to the invention,
- Fig. 2a: illustrates a detail of an airbag cover layer according to a first embodiment of the invention, here an outer airbag cover layer of the airbag cover of Fig. 1,
- Fig. 2b: illustrates an airbag cover layer according to prior art, here an inner airbag cover layer of the airbag cover of Fig. 1,
- Fig. 2c: is a schematic cross-section through the airbag cover of Fig. 1,
- Fig 3: is a detailed view of a predetermined breaking zone of the airbag cover layer of Fig. 2a according to the first embodiment of the invention,
- Fig. 4: illustrates a tear line of the outer airbag cover layer of Fig 2a,
- Fig. 5: illustrates a predetermined breaking zone of an outer airbag cover layer according to a second embodiment of the invention,
- Fig. 6: illustrates a predetermined breaking zone of an outer airbag cover layer according to a third embodiment of the invention,
- Fig. 7: illustrates a predetermined breaking zone of an outer airbag cover layer according to a fourth embodiment of the invention,
- Fig. 8a-c: illustrate different tear lines for an airbag cover comprising the outer airbag cover layer according to the fourth embodiment, and
- Fig. 9: illustrates a predetermined breaking zone of an outer airbag cover layer according to a fifth embodiment of the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

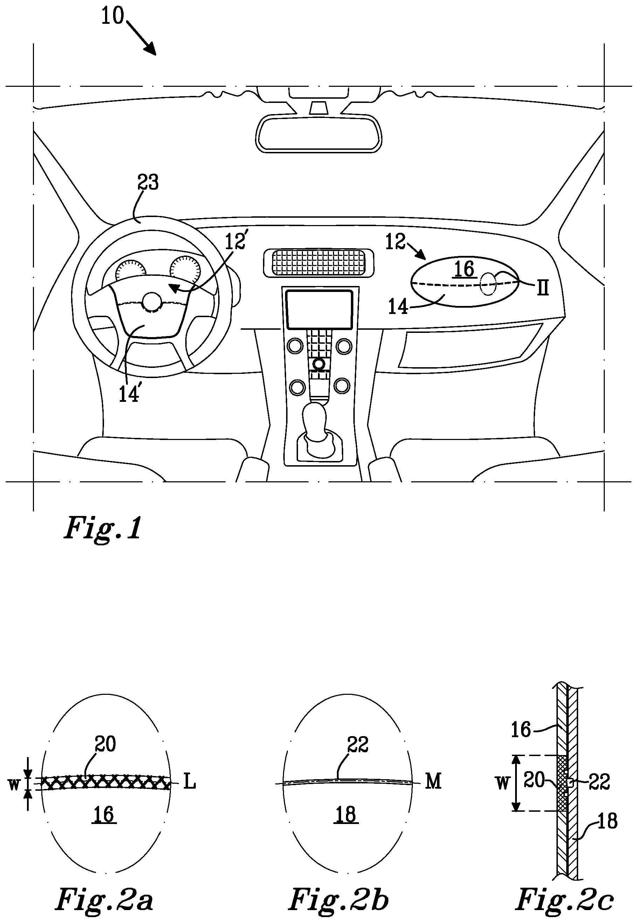

Figure 1 schematically illustrates a vehicle 10 with a dashboard comprising a passenger airbag 12, which is covered by an airbag cover 14. The airbag 12 is intended to protect a user sitting in the passenger front seat. The airbag cover 14 comprises an outer airbag cover layer 16 facing the user of the vehicle 10 and an inner airbag cover layer 18 facing the airbag 12. The inner airbag cover layer 18 may be part of the housing for the airbag and is usually made of plastics. The outer airbag cover layer 16 may be made of plastic or leather. The material of the outer airbag cover layer 16 is preferably aesthetically pleasing to a user of the vehicle 10. It may be chosen to match, or be the same as, the material of the interior of the vehicle 10.

In case of a collision or an imminent collision, the airbag 12 may be inflated in order to protect the user of the vehicle 10. The inflating airbag 12 then breaks the airbag cover 14 in order to deploy. In order to facilitate the breaking of the airbag cover 14, there is arranged a predetermined breaking zone 20, 22 in the respective airbag cover layers 16, 18. In the predetermined breaking zone 20, 22 the force needed to break the material in order to open the airbag cover layer 16, 18 is less than the force needed to break the material of the rest of the airbag cover layer 16, 18. This may be achieved by local weakenings of the material, e.g. by locally reduced material thickness, by slots or perforations cut in the material and/or by locally changing the material strength properties.

Figure 2a illustrates a detail of an outer airbag cover layer 16 according to an embodiment of the invention having a predetermined breaking zone 20. Figure 2b illustrates a detail of an inner airbag cover layer 18 according to prior art having a predetermined breaking zone 22 of a few millimetres width, e.g. up to 3 millimetres. Figure 2c is a schematic cross section through the airbag cover 14 through the respective predetermined breaking zones 20,22.

The predetermined breaking zone 20 of the outer airbag cover layer 16 has a main extension, having a centre line L of the predetermined breaking zone 20. The centre line L may be straight, or it may have a curved shape, e.g. partly enclosing a logo of the vehicle manufacturer and/or following the shape of the dashboard. In a similar way, the predetermined breaking zone 22 of the inner airbag cover layer 18 has a main extension, which follows a centre line M of the predetermined breaking zone 22 of the inner airbag cover layer 18. The two predetermined breaking zones 20, 22 have similar main extensions L, M, since they are intended to be aligned with each other during manufacture and/or assembly of the airbag cover 14.

The predetermined breaking zone 20 of the outer airbag cover layer 16 has a width w, i.e. a maximum transverse dimension, which may be at least 10 mm, preferably at least 15 mm and most preferably at least 20 mm wide. The width w is measured perpendicular to the centre line L. By having such a wide predetermined breaking zone 20, it is secured that the predetermined breaking zone 20 of the outer airbag cover layer 16 aligns with the predetermined breaking zone 22 of the inner airbag cover layer 18, even if there is a translational and/or angular mismatch between the two airbag cover layers 16, 18, during manufacture and/or assembly of the airbag cover 14. The predetermined breaking zone 22 of the inner airbag cover layer 18 is narrower than that of the outer airbag cover layer 16.

Figure 2c shows the cross-section of the airbag cover 14. As is easily gleaned from the figure, the width w of the predetermined breaking zone 20 of the outer airbag cover layer 16 is wider than the width of the predetermined breaking zone 22 of the inner airbag cover layer 18. Further, the illustrated example illustrates that the local weakening of predetermined breaking zone 20 of the outer airbag cover layer 16 is made from the underside of the outer airbag cover layer 16, such that the weakening is not visible from the outside of the airbag cover 14.

Even if Figures 1, 2a and 2b illustrate an airbag cover 14 for a passenger airbag 12, other airbag covers 14' according to the invention having similar characteristics may be utilized for an airbag 12' located at another location of the vehicle 10, e.g. in a steering wheel 23, a door, a seat or a roof lining.

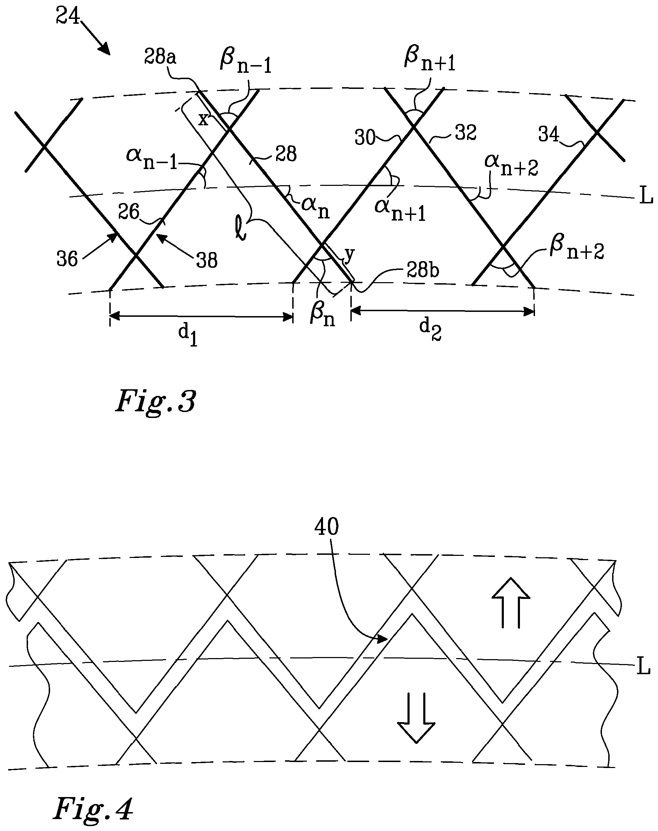

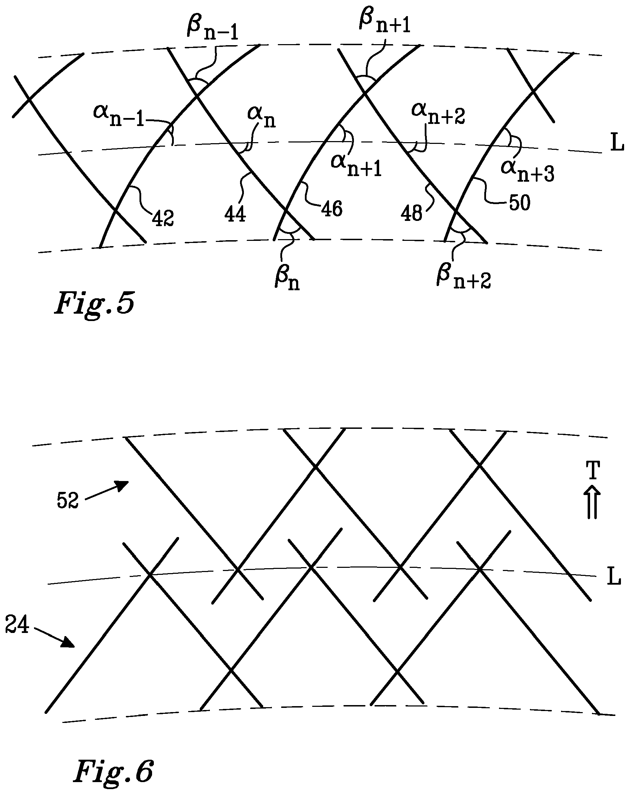

Figure 3 is a detailed view of a portion of the predetermined breaking zone 20 of the outer airbag cover layer 16 of Figure 2a. The predetermined breaking zone 20 comprises a plurality 24 of weakenings 26, 28, 30, 32, 34. In the illustrated example of Figure 3, the weakenings 26, 28, 30, 32, 34 extend as straight lines, but they may also have a curved shape as exemplified below for Figure 5. The weakening has an elongate shape, i.e. it is longer than it is wide. The weakening may have a length I of between 0.1 and 30 mm, preferably between 0.3 and 20 mm and most preferably between 0.5 and 10 mm, as measured along the weakening from one end to another. The weakening may comprise a slot, i.e. a cut through the airbag cover layer 16. Alternatively, it may comprise a plurality of small perforations, e.g. point-like or small lines, arranged one after each other along the extension of the weakening. However, preferably the weakening comprises a locally reduced material thickness, such that it is not visible from the outside of the airbag cover 14,14'. Hence the user of the vehicle cannot see that there is a predetermined breaking zone 20 from the outside.

Each weakening of the first embodiment has two ends 28a, 28b. Further, each weakening 26, 28, 30, 32, 34 intersects a preceding weakening as seen in the main extension, i.e. along the centre line L. Further, each weakening 26, 28, 30, 32, 34 also intersects a subsequent weakening as seen in the main extension, i.e. along the centre line L. Thus, as illustrated in Figure 3, the weakening number n, intersects with the weakening number n-1 and with the weakening number n+1.

The intersection with the preceding weakening number n-1 occurs at a position located x% of the length I along said weakening n as measured from the end 28a closest to the preceding weakening n-1, wherein 0% < x ≤ 50%, preferably 5% ≤ x ≤ 40%, more preferably 10% ≤ x ≤ 30%.

In a similar way, the intersection with the subsequent weakening n+1 occurs at a position located y% of the length I along said weakening n as measured from the end 28b closest to the subsequent weakening n+1, wherein 0% < y ≤ 50%, preferably 5% ≤ y ≤ 40%, more preferably 10% ≤ y ≤ 30%.

Each weakening 26, 28, 30, 32, 34 forms an angle α to the centre line L, angle αₙ₋₁, αₙ, αₙ₊₁ etc. The angle α is between 0° and 90°, preferably between 15° and 75° and most preferably between 30° and 60°. In the illustrated example the angle α is about 50°.

The length I of the weakening 26, 28, 30, 32, 34 depends on the width w of the predetermined breaking zone 20 and the angle α. If the predetermined breaking zone 20 is straight as illustrated in Figure 3, w is given by w = I * sin α.

In the case a weakening intersects the centre line L more than once, the angle α is defined as the smallest angle in relation to the centre line L. If the weakening has a curved shape, the angle α is measured as the angle of a tangent of the weakening at the intersection of the centre line L. Similarly, if the centre line L has a curved shape, the angle α is determined utilizing the angle of a tangent of the centre line L at the intersection with the weakening.

The plurality 24 of weakenings 26, 28, 30, 32, 34 illustrated in Figures 2a and 3 comprises a first plurality 36 of weakenings 26, 30, 34 which are parallel to each other at a distance of d₁ from each other. There is also a second plurality 38 of weakenings 28, 32, which are also parallel to each other, but angled in relation to the weakenings 26, 30, 34 of the first plurality 36, at a distance of d₂ from each other. The first plurality 36 and the second plurality 38 together form the plurality 24 of weakenings of the predetermined breaking zone 20 of the outer airbag cover layer 16.

The weakenings are arranged such that a weakening 26, 30, 34 of the first plurality 36 has a weakening 28, 32 of the second plurality 38 at either side. In the same way, a weakening 28, 32 of the second plurality 38 has a weakening 26, 30, 34 of the first plurality 36 at either side. The weakenings 26, 30, 34 of the second plurality 38 are angled in relation to the weakenings of the first plurality 36 by an angle β, βₙ₋₁, βₙ, βₙ₊₁ etc. The angle β is between 0° and 180°, preferably between 30° and 150° and most preferably between 45° and 135°. In the illustrated example the angle β is about 80°.

As can be seen in Figure 3, the sum of the angle α for the intersection of a weakening with the centre line L, the angle β between the weakening and the subsequent or preceding weakening and the angle α for the intersection of that subsequent or preceding weakening with the centre line L equals the angular sum of a triangle, i.e. 180°. For example: αₙ + βₙ + αₙ₊₁ = 180°.

When the airbag inflates, the outer airbag cover layer 16 will break in the predetermined breaking zone 20 along the plurality 24 of weakenings 26, 28, 30, 32, 34. Thereby a zigzag-shaped continuous tear line 40 will appear, as illustrated in Figure 4.

As mentioned above, Figures 2a, 3 and 4 illustrate the outer airbag cover layer 16. The airbag cover 14 also comprises an inner airbag cover layer 18. The zigzag-shaped continuous tear line 40 is wide enough to align with the predetermined breaking zone 22 of the inner airbag cover layer 18, even if there is a translational and/or angular mismatch between the airbag cover layers 16, 18 during manufacture and/or assembly of an airbag cover.

Figure 5 illustrates a predetermined breaking zone 20 of an outer airbag cover layer 16 according to a second embodiment of the invention. The second embodiment differs from the first embodiment in that the weakenings 42, 44, 46, 48, 50 have a curved shape. Also in this embodiment, the weakenings 42, 44, 46, 48, 50 form an angle α in relation to the centre line L and an angle β between each other.

Figure 6 illustrates a predetermined breaking zone 20 of an outer airbag cover layer 16 according to a third embodiment of the invention, wherein the plurality 24 of weakenings 26, 28, 30, 32, 34 of the first embodiment is repeated in an additional plurality 52 of weakenings, wherein the additional plurality 52 of weakenings is located in parallel to the plurality 24 of weakenings 26, 28, 30, 32, 34 of the first embodiment as seen in the direction of the main extension the predetermined breaking zone 20 and displaced relative to the plurality 24 of the first embodiment as seen in a direction T transverse to the main extension of the predetermined breaking zone 20. Thereby two, as illustrated in Figure 6, three, four or more parallel patterns of weakenings may be formed.

Further, the weakenings of the different pluralities 24, 52 are located transversally so close to each other that a weakening 26, 28, 30, 32, 34 of the plurality 24 of the first embodiment has an extension in the transverse direction T, which overlaps with that of a weakening of the additional plurality 52. For example, as illustrated in Figure 6, weakenings of both pluralities 24, 52 intersect with the centre line L.

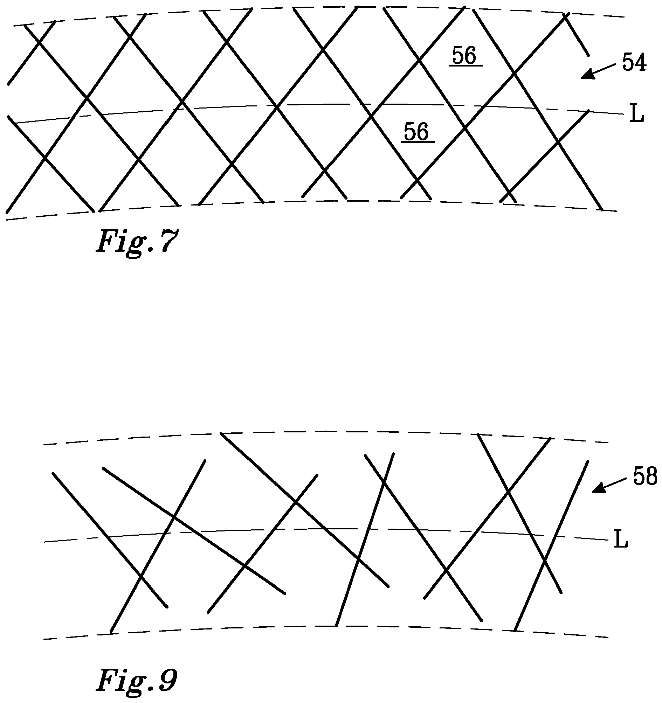

The weakenings may also intersect with more than two other weakenings, which may result in a grid-like pattern 54 of weakenings. The individual units 56 constituting the grid-like pattern may have the shape of a square, rectangle, rhombus, rhomboid or a hexagon. See Figure 7. If using a grid-like pattern 54, the width w of the predetermined breaking zone 20 may be chosen to be as wide as desired independent of the size of the individual units 56 and/or independent of where the weakenings intersect with each other.

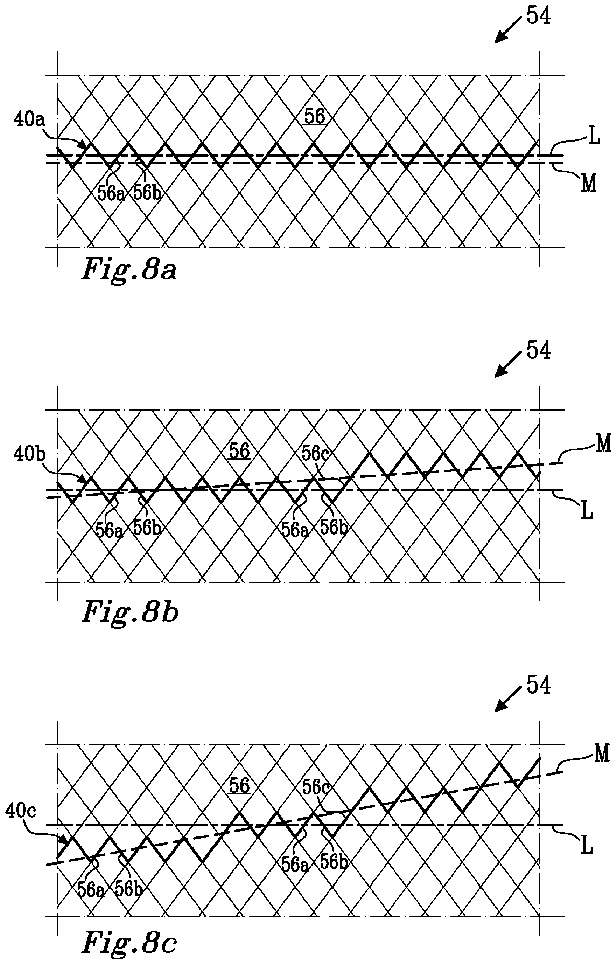

Figures 8a-c illustrate different tear lines 40a, 40b, 40c, which may occur as a result of misalignment between the outer airbag cover layer 16 and the inner airbag cover layer 18 due to translational mismatch and/or angular mismatch for an outer airbag cover layer 18 having predetermined breaking zone 20 comprising a grid-like pattern like the one of Figure 7.

Figure 8a illustrates a case, wherein there is a translational mismatch between the outer airbag cover layer 16 and the inner airbag cover layer 18. Therefore, the centre line L of the outer airbag cover layer 16 is offset to the centre line M of the inner airbag cover layer 18. However, the tear line 40a of the outer airbag cover layer 16 anyway overlaps with the centre line M of the inner airbag cover layer 18. The tear line 40a follows the edges of the individual units 56 of the grid-like pattern. In the illustrated example, the tear line 40a is formed by two edges 56a, 56b of each individual unit 56 making up the tear line 40a. This tear line 40a corresponds to the tear line 40 illustrated in Figure 4.

Figure 8b illustrates a second case, wherein there is a small angular mismatch between the outer airbag cover layer 16 and the inner airbag cover layer 18. Therefore, the centre line M of the inner airbag cover layer 18 is angled in relation to the centre line L of the outer airbag cover layer 16. However, the tear line 40b of the outer airbag cover layer 16 anyway overlaps with the centre line M of the inner airbag cover layer 18. In this case, most of the tear line 40b is formed by two edges 56a, 56b of individual units 56 making up the tear line 40b. However, occasionally the tear line 40b is formed by only one edge 56c of an individual unit 56, in order to compensate for the small angular mismatch. This looks in Figure 8b as if the tear line 40b takes a double step.

Figure 8c illustrates a third case, wherein there is an angular mismatch between the outer airbag cover layer 16 and the inner airbag cover layer 18, which angular mismatch is larger than that of Figure 8b. Therefore, the centre line M of the inner airbag cover layer 18 is more angled in relation to the centre line L of the outer airbag cover layer 16. However, the tear line 40c of the outer airbag cover layer 16 anyway overlaps with the centre line M of the inner airbag cover layer 18. Similar as for Figure 8b, most of the tear line 40c is formed by two edges 56a, 56b of individual units 56 making up the tear line 40c. However, occasionally the tear line 40b is formed by only one edge 56c of an individual unit 56, in order to compensate for the angular mismatch. When comparing to Figure 8b, this occurs more frequently, in every fourth individual unit 56, due to the larger angular mismatch.

Figures 3-8 illustrate that the weakenings form different regular patterns. However, the weakenings may also form an irregular pattern 58, as is illustrated in Figure 9, wherein the weakenings differ from each other as regards length and orientation, leading to varying angles α and β. Thereby the width of the predetermined breaking zone may vary along its extension. Although not illustrated, the weakenings may also vary regarding shape, e.g. curved or straight, and/or regarding how much the material is locally weakened.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An airbag cover layer (18) comprising a predetermined breaking zone (20), said predetermined breaking zone (20) having a main extension and a plurality (24) of weakenings (26, 28, 30, 32, 34; 42, 44, 46, 48, 50) arranged along said main extension,
**characterized in that**
at least one weakening of said plurality (24) of weakenings intersects a preceding weakening and also intersects a subsequent weakening,
wherein said at least one weakening (26, 28, 30, 32, 34; 42, 44, 46, 48, 50) has at least two ends (28a, 28b) and intersects said preceding weakening at a position located x% of a length (I) along said weakening as measured from the end (28a) closest to the preceding weakening, wherein 0% < x ≤ 50%.

2. The airbag cover layer (18) according to claim 1, wherein at least 20%, preferably at least 50% and most preferably at least 80% of said weakenings (26, 28, 30, 32, 34; 42, 44, 46, 48, 50) of said plurality (24) of weakenings intersect a preceding weakening and also intersect a subsequent weakening.

3. The airbag cover layer (18) according to claim 2, wherein said plurality (24) of weakenings (26, 28, 30, 32, 34; 42, 44, 46, 48, 50) are adapted to together form a continuous tear line (40, 40a, 40b, 40c), preferably a zigzag-shaped or undulating continuous tear line.

4. The airbag cover layer (18) according to any one of the preceding claims, wherein one or more of said plurality (24) of weakenings (26, 28, 30, 32, 34; 42, 44, 46, 48, 50) has the length (I) of between 0.1 and 30 mm, preferably between 0.3 and 20 mm and most preferably between 0.5 and 10 mm.

5. The airbag cover layer (18) according to any one of the preceding claims, wherein 5% ≤ x ≤ 40%, preferably 10% ≤ x ≤ 30%.

6. The airbag cover layer (18) according to any one of the preceding claims, wherein said at least one weakening (26, 28, 30, 32, 34; 42, 44, 46, 48, 50) has at least two ends (28a, 28b) and intersects said subsequent weakening at a position located y% of the length (I) along said weakening as measured from the end (28b) closest to the subsequent weakening, wherein 0% < y ≤ 50%, preferably 5% ≤ y ≤ 40%, more preferably 10% ≤ y ≤ 30%.

7. The airbag cover layer (18) according to any one of the preceding claims, wherein one or more (26, 28, 30, 32, 34) of said plurality (24) of weakenings has a straight shape.

8. The airbag cover layer (18) according to any one of the preceding claims, wherein one or more (42, 44, 46, 48, 50) of said plurality of weakenings has a curved shape.

9. The airbag cover layer (18) according to any one of the preceding claims, wherein said at least one weakening (26, 28, 30, 32, 34; 42, 44, 46, 48, 50) is angled at an angle α in relation to a centre line (L) of said predetermined breaking zone (20), said angle α being between 0° and 90°, preferably between 15° and 75°, and most preferably between 30° and 60°.

10. The airbag cover layer (18) according to any one of the preceding claims, wherein said predetermined breaking zone (20) has a centre line (L) and said plurality (24) of weakenings comprises a first plurality (36) of parallel weakenings (26, 30, 34; 42, 46, 50), which are displaced in relation to each other as seen along said centre line (L).

11. The airbag cover layer (18) according to claim 10, wherein said plurality (24) of weakenings further comprises a second plurality (38) of parallel weakenings (28, 32; 44, 48), the weakenings (28, 32; 44, 48) of said second plurality (38) being angled in relation to the weakenings (26, 30, 34; 42, 46, 50) of said first plurality (36) by an angle β, β being between 0°and 180°, preferably between 30° and 150 ° and most preferably between 45° and 135°.

12. The airbag cover layer (18) according to claim 11, wherein said weakenings are arranged such that a weakening (26, 30, 34; 42, 46, 50) of said first plurality (36) is followed by a weakening (28, 32; 44, 48) of said second plurality (38), which in turn is followed by a weakening (26, 30, 34; 42, 46, 50 of said first plurality (36), such that every second weakening belongs to said first plurality (36) and every second weakening to said second plurality (38).

13. The airbag cover layer (18) according to any one of the preceding claims, wherein said plurality of weakenings forms a grid-like pattern (54).

14. The airbag cover layer (18) according to any one of the preceding claims, wherein said plurality (24) of weakenings forms a regular (24, 36, 38, 52, 54) or an irregular pattern (58).

15. An airbag cover (14, 14') comprising
- a first airbag cover layer in accordance with any of the preceding claims forming an outer airbag cover layer (18) and comprising a first predetermined breaking zone (20),
- a second airbag cover layer forming an inner airbag cover layer (16) and comprising a second predetermined breaking zone (22),
wherein said first predetermined breaking zone (20) is wider than said second predetermined breaking zone (22), and
said outer airbag cover layer (18) is located on top of said inner airbag cover layer (16), such that said first predetermined breaking zone (20) substantially overlaps said second predetermined breaking zone (22).

## Patentansprüche

1. Deckschicht (18) einer Airbag-Abdeckung, aufweisend eine vorgegebene Bruchzone (20), wobei die vorgegebene Bruchzone (20) eine Haupterstreckung und eine Vielzahl (24) von Schwächungen (26, 28, 30, 32, 34; 42, 44, 46, 48, 50) aufweist, welche entlang der Haupterstreckung angeordnet sind,
**dadurch gekennzeichnet, dass**
mindestens eine Schwächung der Vielzahl (24) von Schwächungen eine vorhergehende Schwächung schneidet und auch eine nachfolgende Schwächung schneidet, wobei die mindestens eine Schwächung (26, 28, 30, 32, 34; 42, 44, 46, 48, 50) mindestens zwei Enden (28a, 28b) aufweist und die vorhergehende Schwächung an einer x% von einer Länge (l) entlang der Schwächung angeordneten Position schneidet, wenn von dem am dichtesten zu der vorhergehenden Schwächung liegenden Ende (28a) gemessen wird, wobei 0% < x ≤ 50%.

2. Deckschicht (18) einer Airbag-Abdeckung nach Anspruch 1, wobei mindestens 20%, vorzugsweise mindestens 50% und besonders bevorzugt mindestens 80% der Schwächungen (26, 28, 30, 32, 34; 42, 44, 46, 48, 50) der Vielzahl (24) von Schwächungen eine vorhergehende Schwächung schneidet und auch eine nachfolgende Schwächung schneidet.

3. Deckschicht (18) einer Airbag-Abdeckung nach Anspruch 2, wobei die Vielzahl (24) von Schwächungen (26, 28, 30, 32, 34; 42, 44, 46, 48, 50) angepasst sind, um zusammen eine kontinuierliche Schwächungslinie (40, 40a, 40b, 40c) zu bilden, vorzugsweise eine zickzackförmige oder wellenförmige, kontinuierliche Schwächungslinie.

4. Deckschicht (18) einer Airbag-Abdeckung nach einem der vorhergehenden Ansprüche, wobei eine oder mehrere der Vielzahl (24) von Schwächungen (26, 28, 30, 32, 34; 42, 44, 46, 48, 50) eine Länge (l) von zwischen 0,1 und 30 mm, vorzugsweise zwischen 0,3 und 20 mm und besonders bevorzugt zwischen 0,5 und 10 mm aufweist.

5. Deckschicht (18) einer Airbag-Abdeckung nach einem der vorhergehenden Ansprüche, wobei 5% ≤ x ≤ 40%, vorzugsweise 10% ≤ x ≤ 30%.

6. Deckschicht (18) einer Airbag-Abdeckung nach einem der vorhergehenden Ansprüche, wobei die mindestens eine Schwächung (26, 28, 30, 32, 34; 42, 44, 46, 48, 50) mindestens zwei Enden (28a, 28b) aufweist und die nachfolgende Schwächung an einer y% von einer Länge (l) entlang der Schwächung angeordneten Position schneidet, wenn von dem am dichtesten zu der nachfolgenden Schwächung liegenden Ende (28b) gemessen wird, wobei 0% < y ≤ 50%, vorzugsweise 5% ≤ y ≤ 40%, besonders bevorzugt 10% ≤ y ≤ 30%.

7. Deckschicht (18) einer Airbag-Abdeckung nach einem der vorhergehenden Ansprüche, wobei eine oder mehrere (26, 28, 30, 32, 34) der Vielzahl (24) von Schwächungen eine gerade Form aufweist.

8. Deckschicht (18) einer Airbag-Abdeckung nach einem der vorhergehenden Ansprüche, wobei eine oder mehrere (42, 44, 46, 48, 50) der Vielzahl von Schwächungen eine gekrümmte Form aufweist.

9. Deckschicht (18) einer Airbag-Abdeckung nach einem der vorhergehenden Ansprüche, wobei die mindestens eine Schwächung (26, 28, 30, 32, 34; 42, 44, 46, 48, 50) unter einem Winkel α in Bezug auf eine Mittellinie (L) der vorgegebenen Brechzone (20) abgewinkelt ist, wobei der Winkel α zwischen 0° und 90°, vorzugsweise zwischen 15° und 75° und besonders bevorzugt zwischen 30° und 60° liegt.

10. Deckschicht (18) einer Airbag-Abdeckung nach einem der vorhergehenden Ansprüche, wobei die vorgegebene Bruchzone (20) eine Mittellinie (L) aufweist und die Vielzahl (24) von Schwächungen eine erste Vielzahl (36) von parallelen Schwächungen (26, 30, 34; 42, 46, 50) aufweist, welche in Bezug zueinander versetzt sind, wenn entlang der Mittellinie (L) gesehen wird.

11. Deckschicht (18) einer Airbag-Abdeckung nach Anspruch 10, wobei die Vielzahl (24) von Schwächungen weiter eine zweite Vielzahl (38) von parallelen Schwächungen (28, 32; 44, 48) aufweist, wobei die Schwächungen (28, 32; 44, 48) der zweiten Vielzahl (38) in Bezug auf die Schwächungen (26, 30, 34; 42, 46, 50) der ersten Vielzahl (36) unter einem Winkel β abgewinkelt sind, wobei β zwischen 0° und 180°, vorzugsweise zwischen 30° und 150° und besonders bevorzugt zwischen 45° und 135° liegt.

12. Deckschicht (18) einer Airbag-Abdeckung nach Anspruch 11, wobei die Schwächungen derartig angeordnet sind, dass eine Schwächung (26, 30, 34; 42, 46, 50) der ersten Vielzahl (36) von einer Schwächung (28, 32; 44,48) der zweiten Vielzahl (38) gefolgt wird, welche wiederum von einer Schwächung (26, 30, 34; 42, 46, 50) der ersten Vielzahl (36) derartig gefolgt wird, dass jede zweite Schwächung zu der ersten Vielzahl (36) und jede zweite Schwächung zu der zweiten Vielzahl (38) gehört.

13. Deckschicht (18) einer Airbag-Abdeckung nach einem der vorhergehenden Ansprüche, wobei die Vielzahl von Schwächungen ein gitterartiges Muster (54) bildet.

14. Deckschicht (18) einer Airbag-Abdeckung nach einem der vorhergehenden Ansprüche, wobei die Vielzahl (24) von Schwächungen ein regelmäßiges (24, 36, 38, 52, 54) oder ein unregelmäßiges Muster (58) bildet.

15. Airbag-Abdeckung (14, 14'), aufweisend
- eine erste Deckschicht einer Airbag-Abdeckung gemäß einem der vorhergehenden Ansprüche, welche eine äußere Deckschicht (18) einer Airbag-Abdeckung bildet und eine erste vorgegebene Bruchzone (20) aufweist,
- eine zweite Deckschicht einer Airbag-Abdeckung, welche eine innere Deckschicht (16) einer Airbag-Abdeckung bildet und eine zweite vorgegebene Bruchzone (22) aufweist,
wobei die erste vorgegebene Bruchzone (20) breiter als die zweite vorgegebene Bruchzone (22) ist und
die äußere Deckschicht (18) einer Airbag-Abdeckung derartig auf der inneren Deckschicht (16) einer Airbag-Abdeckung angeordnet ist, dass die erste vorgegebene Bruchzone (20) die zweite vorgegebene Bruchzone (22) im Wesentlichen überlappt.

## Revendications

1. Couche de couverture (18) d'airbag, comprenant une zone de rupture (20) prédéterminée, ladite zone de rupture (20) prédéterminée comportant une extension principale et une pluralité (24) d'affaiblissements (26, 28, 30, 32, 34 ; 42, 44, 46, 48, 50) disposés suivant ladite extension principale,
**caractérisée en ce qu'**au moins un affaiblissement de ladite pluralité (24) d'affaiblissements coupe un affaiblissement précédent et coupe aussi un affaiblissement suivant,
dans laquelle ledit affaiblissement (26, 28, 30, 32, 34 ; 42, 44, 46, 48, 50) comporte au moins deux extrémités (28a, 28b) et coupe ledit affaiblissement précédent à un endroit situé à x % d'une longueur (1) le long dudit affaiblissement telle que mesurée à partir de l'extrémité (28a) la plus proche de l'affaiblissement précédent, où 0 % < x ≤ 50 %.

2. Couche de couverture (18) d'airbag selon la revendication 1, dans laquelle au moins 20 %, de préférence au moins 50 % et idéalement au moins 80 % desdits affaiblissements (26, 28, 30, 32, 34 ; 42, 44, 46, 48, 50) de ladite pluralité (24) d'affaiblissements coupe un affaiblissement précédent et coupe aussi un affaiblissement suivant.

3. Couche de couverture (18) d'airbag selon la revendication 2, dans laquelle ladite pluralité (24) d'affaiblissements (26, 28, 30, 32, 34 ; 42, 44, 46, 48, 50) sont aptes à constituer ensemble une ligne de déchirure (40, 40a, 40b, 40c) continue, de préférence une ligne de déchirure continue en forme de zigzag ou onduleuse.

4. Couche de couverture (18) d'airbag selon l'une quelconque des revendications précédentes, dans laquelle un ou plusieurs affaiblissements de ladite pluralité (24) d'affaiblissements (26, 28, 30, 32, 34 ; 42, 44, 46, 48, 50) ont une longueur (1) comprise entre 0,1 et 30 mm, de préférence entre 0,3 et 20 mm et idéalement entre 0,5 et 10 mm.

5. Couche de couverture (18) d'airbag selon l'une quelconque des revendications précédentes, dans laquelle 5 % ≤ x ≤ 40 %, de préférence 10 % ≤ x ≤ 30 %.

6. Couche de couverture (18) d'airbag selon l'une quelconque des revendications précédentes, dans laquelle ledit affaiblissement (26, 28, 30, 32, 34 ; 42, 44, 46, 48, 50) comporte au moins deux extrémités (28a, 28b) et coupe ledit affaiblissement suivant à un endroit situé à y % de la longueur (1) le long dudit affaiblissement telle que mesurée à partir de l'extrémité (28b) la plus proche de l'affaiblissement suivant, où 0 % < x ≤ 50 %, de préférence 5 % ≤ y ≤ 40 %, idéalement 10 % ≤ y ≤ 30 %.

7. Couche de couverture (18) d'airbag selon l'une quelconque des revendications précédentes, dans laquelle un ou plusieurs affaiblissements (26, 28, 30, 32, 34) de ladite pluralité (24) d'affaiblissements ont une forme droite.

8. Couche de couverture (18) d'airbag selon l'une quelconque des revendications précédentes, dans laquelle un ou plusieurs affaiblissements (42, 44, 46, 48, 50) de ladite pluralité d'affaiblissements ont une forme courbe.

9. Couche de couverture (18) d'airbag selon l'une quelconque des revendications précédentes, dans laquelle ledit affaiblissement (26, 28, 30, 32, 34 ; 42, 44, 46, 48, 50) est incliné sous un angle α par rapport à l'axe (L) de ladite zone de rupture (20) prédéterminée, ledit angle α étant compris entre 0° et 90°, de préférence entre 15° et 75° et idéalement entre 30° et 60°.

10. Couche de couverture (18) d'airbag selon l'une quelconque des revendications précédentes, dans laquelle ladite zone de rupture (20) prédéterminée comporte un axe (L) et ladite pluralité (24) d'affaiblissements comprend une première pluralité (36) d'affaiblissements (26, 30, 34 ; 42, 46, 50) parallèles, qui sont comme on le voit déplacés l'un par rapport à l'autre le long dudit axe (L).

11. Couche de couverture (18) d'airbag selon la revendication 10, dans laquelle ladite pluralité (24) d'affaiblissements comprend en outre une seconde pluralité (38) d'affaiblissements (28, 32 ; 44, 48) parallèles, les affaiblissements (28, 32 ; 44, 48) de ladite seconde pluralité (38) faisant avec les affaiblissements (26, 30, 34 ; 42, 46, 50) de ladite première pluralité (36) un angle β, β étant compris entre 0° et 180°, de préférence entre 30° et 150° et idéalement entre 45° et 135°.

12. Couche de couverture (18) d'airbag selon la revendication 11, dans laquelle lesdits affaiblissements sont disposés de telle sorte qu'un affaiblissement (26, 30, 34 ; 42, 46, 50) de ladite première pluralité (36) est suivi par un affaiblissement (28, 32 ; 44, 48) de ladite seconde pluralité (38), qui à son tour est suivi par un affaiblissement (26, 30, 34 ; 42, 46, 50) de ladite première pluralité (36), de telle sorte qu'un affaiblissement sur deux appartient à ladite première pluralité (36) et un affaiblissement sur deux appartient à ladite seconde pluralité (38).

13. Couche de couverture (18) d'airbag selon l'une quelconque des revendications précédentes, dans laquelle ladite pluralité d'affaiblissements forme un motif (54) du genre grille.

14. Couche de couverture (18) d'airbag selon l'une quelconque des revendications précédentes, dans laquelle ladite pluralité (24) d'affaiblissements forme un motif (24, 36, 38, 52, 54) régulier ou irrégulier (58).

15. Couverture (14, 14') d'airbag, comprenant :
- une première couche de couverture d'airbag selon l'une quelconque des revendications précédentes constituant une couche extérieure de couverture (18) d'airbag et comprenant une première zone de rupture (20) prédéterminée,
- une seconde couche de couverture d'airbag constituant une couche intérieure de couverture (16) d'airbag et comprenant une seconde zone de rupture (22) prédéterminée,
dans laquelle ladite première zone de rupture (20) prédéterminée est plus large que ladite seconde zone de rupture (22) prédéterminée, et
ladite couche extérieure de couverture (18) d'airbag est située sur ladite couche intérieure de couverture (16) d'airbag, de telle sorte que ladite première zone de rupture (20) prédéterminée chevauche sensiblement ladite seconde zone de rupture (22) prédéterminée.
